# EUROPEAN PATENT SPECIFICATION

(11) **EP 0 798 157 B1**
(45) Date of publication and mention of the grant of the patent: **09.04.2003**
(21) Application number: 97100933.7
(22) Date of filing: 22.01.1997
(51) Int. Cl.: B60N 2/48

(54) **Guide sleeve for neck rests on vehicle seats**
Nackenstützeführungshülse für Fahrzeugsitze
Manchon de guidage de soutien du cou pour sièges de véhicules

(30) Priority: 30.03.1996 DE 29605983 U
(43) Date of publication of application: 01.10.1997
(73) Proprietor: ITW-ATECO GmbH, D-22844 Norderstedt (DE)
(72) Inventor: Beck, Christian, 97285 Röttingen (DE)
(74) Representative: Patentanwälte Hauck, Graalfs, Wehnert, Döring, Siemons, Schildberg

(56) References cited:
- DE-A- 3 301 073
- DE-A- 4 409 557
- US-A- 5 156 440

## Description

The invention refers to a guide sleeve for neck rests on vehicle seats according to the preamble of patent claim 1.

From the German patent publication DE-A-33 01 073 such a guide sleeve for neck rests has become known wherein an axial bore of the sleeve is enlarged at the upper end thereof, with this enlargement accommodating an elongated spring element which is formed of sheet material and includes two legs curved at the rear end thereof. The legs engage an end wall of the enlargement defining a support portion. The bent legs cross each other and engage the support portion by the curved end portions. The web of the spring interconnecting the legs forms a locking portion and coacts with a rod for the neck rest which is guided by the guide sleeve in order to axially lock the rod by engagement with a recess of the rod. The spring is actuated by means of a U-shaped slide element, having a pair of portions or legs located on opposite sides of the rod or the bore of the sleeve. The slide element has a manually operable portion extending outwardly from the enlargement. By an actuation of the operable portion of the slide element the locking portion is disengaged with the rod and allows axial displacement of the rod.

From the German patent publication DE-A-44 09 557 a guide sleeve for neck rests on vehicle seats has become known which uses a U-shaped spring, with the transverse portion of the spring engaging an end wall of an enlargement of the sleeve, and the legs of the spring extending on opposite sides of the rod of the neck rest in order to engage opposite recesses of the rod. A slide element slidable within the enlargement has cam surfaces coacting with the legs of the spring in order to disengage the legs with the rod. The spring used is for example produced from suitable wire material, and its manufacture is less expensive than that of the spring element of the guide sleeve mentioned above.

In the US-A-5 156 440 a guide sleeve arrangement is disclosed wherein in an enlargement of the guide sleeve an S-shaped spring element is located. One end portion of the spring element is accommodated in a bore of a side wall of the enlargement. An intermediate portion of the spring is straight and adapted to engage recesses of the rod for the neck rest. The other end portion of the spring engages a cam surface of another wall of the enlargement. The recesses of the rod are triangular in cross section so that the walls of the recesses form a ramp so that the rod by pulling or pushing forces may be axially displaced. The locking portion of the spring is then automatically moved out of the respective recesses.

It is an object of the invention to improve a guide sleeve of the kind mentioned and to reduce the expense for the manufacture and mounting of parts without affecting the function.

This object is attained by the features of patent claim 1.

In the guide sleeve according to the invention spring element and pin-shaped locking portion are integrally formed as known. The spring element is formed as an extension of the locking portion and is bent back and engages the end wall of the enlargement. Preferably, the enlargement is integrally formed with the guide sleeve. A specific cover cap is not necessary. The portion is supported by the pair of laterally spaced portions of the slide element. Preferably the locking portion of the spring means is accommodated by bores of the spaced portions of the slide element. Therefore, with the guide sleeve according to the invention only three parts are required, namely sleeve, slide element and integral spring.

In an embodiment of the invention locking portion and spring portion form a U-shape like a hair pin. It is preferably formed of wire material circular in cross section.

Preferably, the slide element is releasably accommodated by the enlargement so that it may not be moved out from the sleeve prior to the assembly or after the removal of the rod, respectively. If the rod is within the guide sleeve, the slide element is prevented from being removed due to the engagement of the locking portion with the rod. The locking or snapping action, respectively, therefore can be relatively weak. The slide element can be simply released, e.g. by means of a tool which is inserted from below or from above through a hole in the enlargement in order to move the parts away from each other.

An embodiment example is described in some detail along accompanying drawings, wherein
- Fig. 1: shows a cross section of the upper portion of a guide sleeve for a neck rest according to the invention;
- Fig. 2: shows a similar cross section as Fig. 1, however, turned about 90°;
- Fig. 3: shows a plan view of the guide sleeve of Fig. 1 and
- Fig. 4: shows a cross section through the guide sleeve of Fig. 1 along line 4-4.

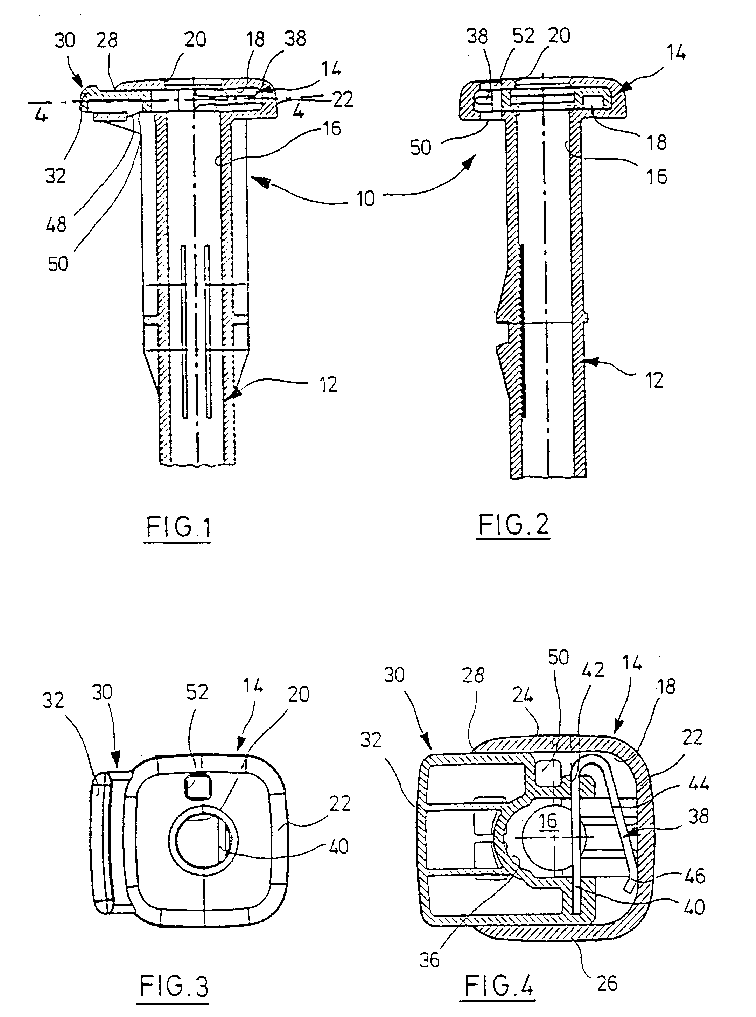

A guide sleeve for a neck rest shown in Figs. 1 and 2 is generally designated with 10. It includes a hollow cylindrical sleeve portion 12 which is only partially shown, and a head 14 radially enlarging the sleeve portion. As can be seen in Figs. 3 and 4, the head 14 has an approximately square contour with rounded comers. A cylindrical bore 16 of sleeve portion 12 is provided with an approximately square enlargement 18 in the area of head 14 which reduces to the diameter of bore 16 at 20. The enlargement 18 is confined at the rear side by an end wall 22 and by side walls 24, 26 (see Figure 4). An open end 28 is positioned opposite to the end wall 22 and extends along the total width of enlargement 18.

A slide element 30 is displaceably located in the enlargement 18. It includes a portion extending beyond the enlargement 18 and forming a manually operable portion 32 which can be particularly seen in Figs. 1 and 3. Lateral portions of slide element 30 are slidably guided by the inner surfaces of side walls 24, 26. At the side facing end wall 22 the slide element 30 has a recess 36 with an arc-shaped bottom. The recess 36 embraces bore 16 or opening 20, by laterally spaced portions of the slide element, respectively.

An integral spring 38 is U-shaped like a hair pin and made of spring wire material. It has a straight locking portion 40 which extends through a bore 42 on one side of a lateral portion of the slide element 30 confining recess 36. It traverses the recess and is inserted into a bore in the opposite lateral portion of the slide element 30.

A rearwardly bent spring portion 44 of the spring 38 has a bent portion 46 and the end thereof which engages the end wall 22 and thus biases the slide element 30 outwardly. As can be seen in Figs. 3 and 4, locking portion 40 traverses bore 16 and may engage the rod of a neck rest (not shown) which is inserted into bore 16. Locking portion 40 engages the rod laterally and snaps into a recess in order to lock the rod axially. For an unlocking it is necessary to push the operable portion 32 in order to move the slide element to the right in Figs. 3 and 4 until locking portion 40 leaves bore 16.

The slide element 30 is locked in the enlargement 18 as shown at 48 by a snapping connection. If a tool is introduced through a lower opening 50 of head 14, the slide element can be somewhat lifted and thus removed from the locking position and from the enlargement 18. The spring 38 is automatically removed with the slide element.

As shown in Fig. 2, also the upper side of head 14 is provided with an opening 52.

## Claims

1. A guide sleeve for neck rests on vehicle seats comprising
- bore means (16) for slidably accommodating a vertically movable rod supporting a neck rest,
- an enlargement (18) disposed adjacent to the upper end of the guide sleeve (10) and extending transversely with respect to the bore (16), the enlargement (18) comprising an end wall (22), a pair of oppositely disposed side walls (24, 26) connected to opposite ends of the end wall (22) and an open end (28) disposed opposite to the end wall (22),
- a slide element (30) guided within the enlargement (18) between the pair of side walls (24, 26) and towards and away from the end wall and including a manually operable portion (32) formed upon one end of the slide element (30) and extending outwardly from the enlargement (18) through the open end (28), and a pair of laterally spaced portions formed upon a second end of the sliding element (30) opposite to the manually operable portion (32), and disposed upon opposite sides of the wall (16),
- an integral spring (38) having a locking portion (40) adapted to engage the vertically movable rod to prevent axial displacement thereof and to be moved by the slide element (30) to be disengaged from the rod and to allow axial displacement thereof,
- the spring means having a second or rearwardly bent spring portion (44, 46) adapted to engage the end wall (22) for biasing the slide element (30) away from the end wall (22) and for biasing the locking portion (40) so as to achieve engagement with the rod,
the spring means includes two legs connected by a bend, one leg forming the second spring portion (44, 46) and the other leg forming the locking portion (42), **characterized in that** the locking portion (42) is fixedly mounted upon each of the laterally spaced portions of the slide element (30).

2. The guide sleeve of claim 1, wherein locking portion (40) and spring portion (44) form a U-shape like a hair pin.

3. The guide sleeve of claim 1 or 2, wherein the enlargement (18) is formed in a head portion (14) of the guide sleeve (12), the head portion being formed integrally with the guide sleeve (12).

4. The guide sleeve of claim 1 or 2, wherein a releasable snapping connection is formed between the slide element (30) and the enlargement (18) to prevent the slide element (30) being moved out of the enlargement (18) through the open end.

5. The guide sleeve of claim 1, wherein the enlargement (18) has an upper or lower opening (50, 52) for the insertion of the tool in order to release the snapping connection and to allow removal of the slide element (30) out of the enlargement (18).

6. The guide sleeve of one of the claims 1 to 5, wherein the integral spring (38) is made of a metal.

7. The guide sleeve of one of the claims 1 to 6, wherein the locking portion (40) is accommodated by bores (42) of the lateral portions of the slide element (30).

## Patentansprüche

1. Führungshülse für Kopfstützen an Fahrzeugsitzen mit
- einer Bohrung (16), die eine die Kopfstütze abstützende Stange gleitend aufnimmt,
- einer quer zur Bohrung (16) sich erstreckenden Erweiterung (18) am oberen Ende der Führungshülse, wobei die Erweiterung (18) eine Endwand (22), zwei gegenüberliegende Seitenwände (24, 26), die mit der Endwand verbunden sind und ein offenes Ende (28) gegenüber der Endwand (22) aufweist,
- einem Schieberelement (30), das gleitend in der Erweiterung geführt ist auf die Endwand (22) zu und von dieser fort und eine Handhabe (32) aufweist, welche an dem Ende des Schieberelements ausgebildet ist, das durch das offene Ende (28) aus der Erweiterung (18) heraussteht, wobei zwei seitlich beabstandete Abschnitte am zweiten Ende des Schieberelements (30) gegenüber der Handhabe (32) geformt sind, die auf gegenüberliegenden Seiten der Wand angeordnet sind,
- einer einstückigen Feder (38) mit einem Verriegelungsabschnitt (40), der mit der vertikal beweglichen Stange in Eingriff bringbar ist, um eine axiale Verstellung zu verhindern und der vom Schieberelement (30) bewegt werden kann, um ihn mit der Stange außer Eingriff zu bringen, um eine axiale Verstellung zu ermöglichen,
- wobei die Feder einen zweiten oder rückwärts gebogenen Federabschnitt (44, 46) aufweist, der in Eingriff mit der Endwand (22) bringbar ist, um das Schieberelement (30) von der Endwand (22) fort vorzuspannen und um den Verriegelungsabschnitt (40) vorzuspannen, um einen Eingriff mit der Stange zu bewirken, wobei die Feder zwei Schenkel aufweist, die über die Biegung miteinander verbunden sind, wobei ein Schenkel den zweiten Federabschnitt (44, 46) bildet und der andere Schenkel den Verriegelungsabschnitt (42), **dadurch gekennzeichnet, daß** der Verriegelungsabschnitt (42) fest mit jedem der seitlich beabstandeten Abschnitt des Schieberelements (30) verbunden ist.

2. Führungshülse nach Anspruch 1, wobei der Verriegelungsabschnitt (40) und der Federabschnitt (44) U-Form bilden wie eine Haarnadel.

3. Führungshülse nach Anspruch 1 oder 2, wobei die Erweiterung in einem Kopfabschnitt (14) der Führungshülse (12) geformt ist und der Kopfabschnitt einteilig mit der Führungshülse (12) geformt ist.

4. Führungshülse nach Anspruch 1 oder 2, wobei eine lösbare Schnappverbindung zwischen dem Schieberelement (30) und der Erweiterung (18) vorgesehen ist, welche verhindert, daß das Schieberelement (30) über das offene Ende aus der Erweiterung (18) herausbewegt wird.

5. Schiebehülse nach Anspruch 1, wobei die Erweiterung (18) eine obere oder eine untere Öffnung (50, 52) aufweist für das Einführen eines Werkzeugs, um die Schnappverbindung aufzuheben und die Entfernung des Schieberelements (30) aus der Erweiterung (18) zu ermöglichen.

6. Schiebehülse nach einem der Ansprüche 1 bis 5, wobei die einstückige Feder (38) aus Metall gefertigt ist.

7. Führungshülse nach einem der Ansprüche 1 bis 6, wobei der Verriegelungsabschnitt (40) von Bohrungen (42) der seitlichen Abschnitte des Schieberelements (30) aufgenommen ist.

## Revendications

1. Manchon de guidage pour appuie-tête pour siège de véhicule, comprenant
- un alésage (16) destiné à recevoir en coulissement une tige mobile verticalement qui supporte un appuie-tête,
- un agrandissement (18) contigu à l'extrémité supérieure du manchon de guidage (10) et s'étendant transversalement par rapport à l'alésage (16), cet agrandissement (18) comprenant une paroi d'extrémité (22), deux parois latérales opposées (24, 26) jointes à des extrémités opposées de la paroi d'extrémité (22) et une extrémité ouverte (28) opposée à la paroi d'extrémité (22),
- un élément coulissant (30) guidé dans l'agrandissement (18) entre les parois latérales (24, 26) et vers la paroi d'extrémité et en sens contraire et comportant une partie manoeuvrable manuellement (32) formée sur une extrémité de l'élément coulissant (30) et s'étendant vers l'extérieur à partir de l'agrandissement (18) à travers l'extrémité ouverte (28), et deux parties espacées latéralement formées sur une deuxième extrémité de l'élément coulissant (30) à l'opposé de la partie manoeuvrable manuellement (32) et situées sur des côtés opposés de la paroi (16),
- un ressort d'une seule pièce (38) ayant une partie de blocage (40) faite pour venir en prise avec la tige mobile verticalement pour empêcher le déplacement axial de celle-ci et être mue par l'élément coulissant (30) pour être dégagée de la tige et permettre le déplacement axial de celle-ci,
- le moyen élastique ayant une deuxième partie élastique recourbée en arrière (44, 46) faite pour venir en prise avec la paroi d'extrémité (22) pour éloigner l'élément coulissant (30) de la paroi d'extrémité (22) et pousser la partie de blocage (40) pour la mettre en prise avec la tige,
- le moyen élastique comportant deux branches reliées par un coude, une branche formant la deuxième partie élastique (44, 46) et l'autre branche formant la partie de blocage (42),
**caractérisé par le fait que**
la partie de blocage (42) est montée fixe sur chacune des parties espacées latéralement de l'élément coulissant (30).

2. Manchon de guidage selon la revendication 1, dans lequel la partie de blocage (40) et la partie élastique (44) ont une forme en U du genre épingle à cheveux.

3. Manchon de guidage selon l'une des revendications 1 et 2, dans lequel l'agrandissement (18) est formé dans une partie de tête (14) du manchon de guidage (12), cette partie de tête faisant corps avec le manchon de guidage (12).

4. Manchon de guidage selon l'une des revendications 1 et 2, dans lequel un joint à encliquetage est formé entre l'élément coulissant (30) et l'agrandissement (18) pour empêcher la sortie de l'élément coulissant (30) de l'agrandissement (18) par l'extrémité ouverte.

5. Manchon de guidage selon la revendication 1, dans lequel l'agrandissement (18) a une ouverture inférieure ou supérieure (50, 52) pour l'introduction de l'outil pour dégager le joint à encliquetage et permettre l'enlèvement de l'élément coulissant (30) de l'agrandissement (18).

6. Manchon de guidage selon l'une des revendications 1 à 5, dans lequel le ressort d'une seule pièce (38) est en métal.

7. Manchon de guidage selon l'une des revendications 1 à 6, dans lequel la partie de blocage (40) est reçue par des trous (42) des parties latérales de l'élément coulissant (30).
